# EUROPEAN PATENT SPECIFICATION

(11) **EP 2 029 460 B1**
(45) Date of publication and mention of the grant of the patent: **03.11.2010**
(21) Application number: 07790118.9
(22) Date of filing: 01.06.2007
(51) Int. Cl.: B65G 47/244, B65G 47/61, B65G 47/84, B65B 35/58

(54) **CONVEYOR AND POSITIONING DEVICE FOR POUCH-PACKAGED PRODUCTS**
FÖRDER- UND POSITIONIERUNGSVORRICHTUNG FÜR BEUTELVERPACKTE PRODUKTE
TAPIS DE TRANSPORT ET DISPOSITIF DE POSITIONNEMENT DE PRODUITS ENSACHÉS

(30) Priority: 05.06.2006 IT VR20060100
(43) Date of publication of application: 04.03.2009
(73) Proprietor: SPS Italiana Pack Systems S.p.A., 36036 Torrebelvicino (VI) (IT)
(72) Inventor: CERUTTI, Giuliano, 28021 Borgomanero (NO) (IT)
(74) Representative: Petraz, Gilberto Luigi
(86) International application number: PCT/IT2007/000386
(87) International publication number: WO 2007/141817

(56) References cited:
- EP-A- 1 486 439
- WO-A-2005/058703
- FR-A- 2 310 262
- US-A- 3 399 768
- US-A- 3 860 104
- US-A- 4 098 932

## Description

### TECHNICAL FIELD

This inventions concerns a package conveyor and positioning device, in particular designed for pouch-packaged products, in particular food products such as snacks including bar-type snacks.

More specifically, this invention refers to a conveyor and positioning device designed in such a way as to allow a succession of packages, coming from a packaging machine, to be individually rotated so as to move from a transverse position to a longitudinal position with respect to the infeed direction.

The device according to the invention consists of a system that can rotate each package by 90 degrees on the flat so that the packages can be transferred parallel to one another to a grouping machine.

This invention can be applied in the applied mechanics sector to packaging machines, in particular to automatic in-line packaging machines of food products.

### BACKGROUND ART

The use of packaging machines forming part of a system able to pouch-package and box food products of various kinds, by means of automatic packaging lines, is known in the packaging sector.

The food products of various kinds coming out of the tunnel ovens or cooling tunnels (snacks, pastries, covered bars, croissants and other products) are automatically transferred towards packaging lines which foresee the use of horizontal or vertical packaging machines, for example flow pack machines, which form closed packages, generally with three seals, starting from a reel of hot or cold-sealing wrapping material.

The various packaging machines can be very different from each other, but they all have in common the purpose of packaging the products, starting from a reel of heat-sealing wrapping material, and of conveying them towards the boxing sector.

One of the problems encountered with the use of these packaging machines concerns the packaged products which are transferred to the infeed line in a longitudinal direction, typically in the case of snacks and bars.

This device, which is extremely common above all in the case of classic snacks or bars, takes up a considerable amount of space and above all prevents the infeed time from reaching a satisfactory production rhythm.

This is due to the fact that the products move forward with their largest side, that is to say their length, taking up the space on the conveyer belt, with the consequence that the automatic line has excessively large dimensions and the product is boxed in an irrational way, often making it necessary for personnel to intervene manually, with all the negative consequences that derive from this drawback.

Document FR 2 310 262 discloses a package conveyor and positioning device according to the preamble of claim 1.

### DESCRIPTION OF THE INVENTION

This invention proposes to provide a conveyor and positioning device that can eliminate or at least reduce the drawbacks described above.

The invention also proposes to provide a conveyor and positioning device that is very simple to produce so as not to increase production costs, and which provides the packaging plant with a series of substantial advantages, the first of which is the automatic alignment of the packages in a transverse direction, these packages entering in a longitudinal direction with respect to the infeed line.

This is achieved by means of the package conveyor and positioning device of claim 1.

The dependent claims describe advantageous embodiments of the invention.

The main advantages of this solution, in addition to those deriving from its construction simplicity, concern the fact that after the pouch-packaged products have been rotated, they can be conveyed side by side, parallel to each other along their longest side, in a direction that is transverse to the infeed direction.

The packages will thus reach the boxing station already positioned alongside each other, thus taking up all the space available, and at the same time the production speed is increased.

The device according to the invention therefore substantially consists of a machine for positioning the packages, located between an infeed station of the products already packaged and sealed by the packaging machine and a station for the collection and transfer of the packages towards the boxes which form the outer packaging ready to be sent to the distribution system.

The machine for positioning the packages consists of a line of adjustable forks hinged in a vertical direction on an infeed line located above the product infeed line.

The product passes along a route which first slopes upwards and then down, so that at the top each package can be gripped by the relative fork, rotated 90° and then released and transferred towards the conveyor machine and the boxing station.

Each package, which enters in a longitudinal direction, is thus automatically positioned in a transverse direction, in order to take up as little space as possible and to be boxed in the most appropriate manner.

### DESCRIPTION OF THE DRAWINGS

Other features and advantages of the invention will become evident on reading the following description of one embodiment of the invention, given as a non-binding example, with the help of the accompanying drawings, in which:
- figure 1 represents a schematic side view of the conveyor and positioning device according to the invention and designed for pouch-packaged products;
- figure 2 represents a schematic plan view;
- figure 3 shows a detailed view of sector A of figure 1;
- figure 4 represents a detail of the product infeed line on a sloping route and of the respective line of adjustable forks;
- figure 5 represents a detailed schematic plan view of the infeed line and of the respective line of forks.
With reference to the accompanying figures, the reference number 10 indicates the overall machine.

### DESCRIPTION OF ONE EMBODIMENT OF THE INVENTION

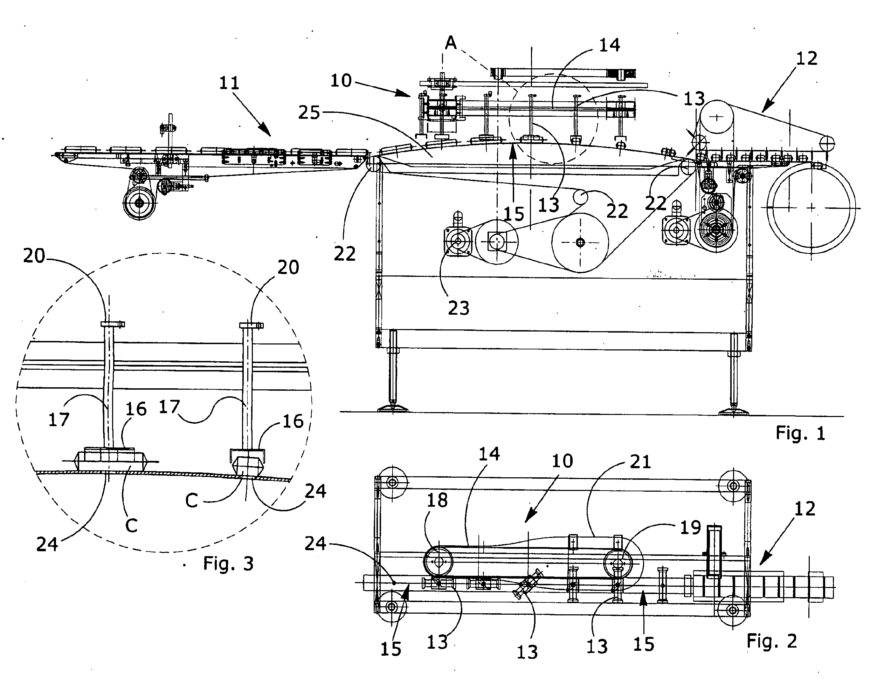

With reference to the accompanying figures, and first of all to figure 1, the conveyor and positioning device, indicated overall with 10, is located between an infeed station 11 of the products already packaged and sealed by the packaging machine and a station for the collection and transfer 12 of the packages towards the boxes which form the outer packaging ready to be sent to the distribution system.

The conveyor and positioning device 10, for pouch-packaged products, substantially consists of a line of adjustable forks 13, which are hinged in a vertical direction on an infeed line 14 located above the product infeed line 15.

More specifically, the adjustable forks 13 consist of an inverted "U" shaped section 16 whose base is fixed at its centre to the lower end of a respective rotating vertical shaft 17.

A certain number of rotating shafts 17, on which the respective sections are mounted, are positioned at regular intervals on the infeed line 14, which is fitted between two gears 18 and 19 at least one of which is power-driven.

In turn, the upper end of each rotating shaft 17 is connected to a rotation device 20 which consists of a connecting rod inserted together with its extremity, equipped with a bearing, a pad or similar, in a cam track 21, positioned on the infeed line 14, in such a way that the shaft and the relative section turn by 90 degrees in the predetermined sector, as will be better explained below.

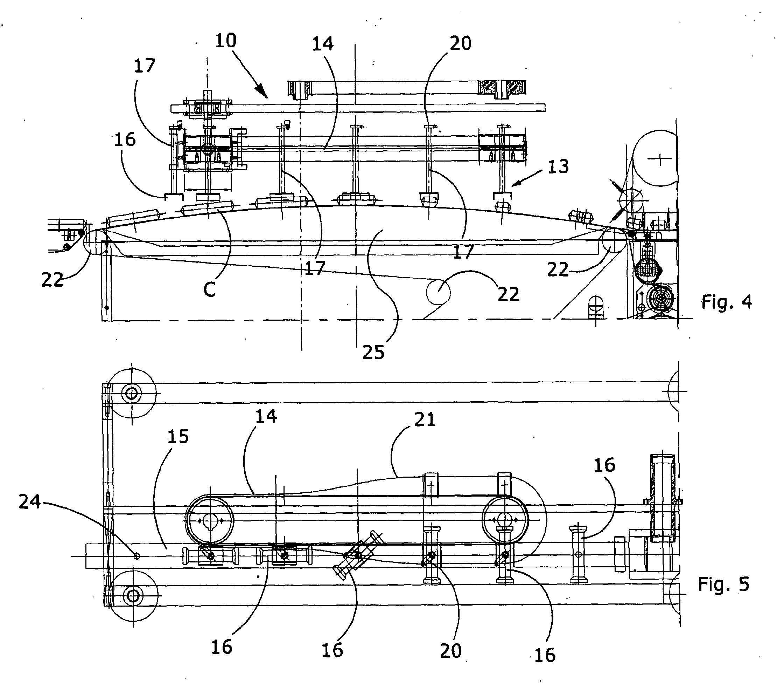

Below the positioning device is the product infeed line 15, consisting of a conveyor belt stretched between two gears 22 and driven by a motor 23. The belt 15, on whose upper surface the products are conveyed, presents a curved shape, that is to say it first slopes upwards and then downwards, as is clearly visible in figure 4.

The curvature of the product infeed zone is obtained by using a curved surface, and in such a way that the top of the curve is approximately in the centre of the positioning line comprising the forks 13.

The conveyor belt 15 presents regularly space holes 24 to allow the passage of air aspirated from inside the chamber 25 on which the conveyor belt is positioned.

The curved surface on which the belt 15 is positioned forms the upper surface of the chamber 25 in which a vacuum is created by suction means not shown as they are already known.

The holes 24 are positioned along the belt 15 at regular intervals corresponding to the distance between the infed products, this distance being in turn equal to the distance between the forks 13.

This suction system on the belt 15, through the holes 24, ensures that the infed products remain perfectly adherent in the position where they are gripped by the respective fork and turned 90° degrees to a transverse position.

The suction system prevents the products from moving on their own while allowing their angular movement by means of the forks to a transverse position.

The product entering from the infeed sector 11 passes along a route that first slopes upwards and then down so that at the top of the slope each package C, while remaining adherent to the conveyor belt 15 by means of the suction system activated through the holes 24, can be gripped by the respective fork 13, rotated 90 degrees and then released for transfer to the conveyor machine 12 and then to the boxing station.

Each package C, arriving in a longitudinal direction from the infeed device 11, is therefore rotated and automatically positioned in a transverse direction, thus taking up less space and being boxed in the most appropriate manner.

The conveyor unit 12, located downstream of the positioning device, is also equipped with an infeed belt, in this case fitted with dividers that form compartments into each of which a package C is inserted in a transverse direction with respect to the infeed line.

An example of how the package conveyor and positioning device 10 according to the invention functions will now be described.

Each of the product packages C, arranged longitudinally one after the other on the infeed device 11, is transferred to the belt of the infeed line 15 which carries them along on the first upward section of the route.

While the longitudinally arranged packages move up the slope, they encounter the respective forks 13 which, in this sector, are also arranged longitudinally. The distance between the forks 13 is obviously calculated to be synchronised with the packages moving forward on the belt.

When the packages reach the highest part of the curve they are totally inserted in the fork and precisely at this point the pawl of the connecting rod 20 moves outwards, causing the fork to rotate by 90 degrees.

Continuing to move forwards on the belt 15, packages rotated by 90° start to move downwards until they reach the end of the line and are transferred to the subsequent line 12, where the belt is fitted with dividers which improve the infeed of the products.

It can be noted that the transversally positioned packages are now much closer to each other, since their long sides are parallel to each other, with the result that they take up much less space.

The transverse position also allows the packages to be inserted in the boxes in a more rational way, using all the space available.

As can be seen, the device according to the invention allows considerable advantages from the production point of view, since by rationalising the use of space, the production capacity of the plant is increased.

The invention is described above with reference to a preferred embodiment. It is nevertheless clear that the invention is susceptible to numerous variations that lie within its sphere, within the framework of technical equivalents, the scope of protection of the invention being defined by the appended claims.

## Claims

1. A package conveyor and positioning device (10) located between an infeed station of the products arriving from a packaging machine already packaged and sealed and a station for the collection and transfer of the products towards the boxes which form the outer packaging ready for shipment to the distribution system, comprising:
- a product infeed line (15) for conveying the products (C); and
- a positioning device comprising an infeed line (14) located above the product infeed line (15), said infeed line (14) being fitted between two gears at least one of which is power driven, and a plurality of adjustable forks (13) hinged in a vertical direction on said infeed line (14), said adjustable forks being rotated by 90 degrees in a predetermined sector of the positioning device;
**characterized in that** the product infeed line (15) presents at least one curved central sector forming a route that slopes slightly upwards and then downwards, in such a way that at the top of the curve each package can be successively gripped by the respective fork (13), rotated by 90 degrees while continuing to move forwards on the product infeed line (15) and then released for transfer to the conveying machine (12) and then the boxing station.

2. A package conveyor and positioning device (10) according to the foregoing claim, **characterised in that** each package, entering in a longitudinal direction, is rotated by the respective fork (13) and thus positioned automatically in a transverse direction towards the final part of the product infeed line (15), so as to take up as less space and be boxed in the most appropriate manner.

3. A package conveyor and positioning device (10) according to any of the foregoing claims, **characterised in that** the adjustable forks (13) consist of an inverted "U" shaped section (16) the base of which is fixed at its centre to the lower end of a rotating vertical shaft (17).

4. A package conveyor and positioning device (10) according to the foregoing claim, **characterised in that** a certain number of rotating shafts (17), on which the respective inverted "U" shaped sections are mounted, are positioned at regular intervals on the infeed line (14).

5. A package conveyor and positioning device (10) according to the foregoing claim, **characterised in that** the upper end of each rotating shaft (17) is connected to a rotation device (20) which consists of a connecting rod inserted together with its extremity, equipped with a bearing, a pad or similar, in a cam track (21), positioned on the infeed line (14), in such a way that the shaft and the relative section turn by 90 degrees in the predetermined sector.

6. A package conveyor and positioning device (10) according to any of the foregoing claims, **characterised in that** the product infeed line (15), located below the positioning device, consists of a conveyor belt stretched between two gears (22) and driven by a motor (23).

7. A package conveyor and positioning device (10) according to claim 6, **characterised in that** the belt (15) on whose upper surface the products are conveyed, presents a curved shape, that is to say it first slopes upwards and then downwards.

8. A package conveyor and positioning device (10) according to any of the foregoing claims, **characterised in that** the curvature of the product infeed zone is obtained by using a curved surface and in such a way that the top of the curve is approximately in the centre of the positioning device comprising the forks (13).

9. A package conveyor and positioning device (10) according to any of the foregoing claims, **characterised in that** the conveyor machine (12), located downstream of the positioning device, is also equipped with an infeed belt, in this case fitted with dividers that form compartments into each of which a package (C) is inserted in a transverse direction with respect to the infeed line.

10. A package conveyor and positioning device (10) according to any of the foregoing claims 6-9, **characterised in that** the conveyor belt (15) presents regularly spaced holes (24) to allow the passage of air aspirated from inside the chamber (25) on which the conveyor belt is positioned.

11. A package conveyor and positioning device (10) according to claim 10, **characterised in that** the curved surface on which the belt (15) is positioned forms the upper surface of the chamber (25) in which a vacuum is created by appropriate suction means.

12. A package conveyor and positioning device (10) according to claim 10 or 11, **characterised in that** the holes (24) are positioned along the belt (15) at regular intervals corresponding to the distance between the infed products, this distance being in turn equal to the distance between the forks (13).

## Patentansprüche

1. Verpackungsförder- und Positionierungsvorrichtung (10), die zwischen einer Zufuhrstation für die Produkte, die von einer Verpackungsmaschine bereits verpackt und versiegelt ankommen, und einer Station für die Sammlung und den Weitertransport der Produkte in Richtung von Schachteln angeordnet ist, die die äußere Verpackung für den Versand zu dem Verteilungssystem bilden, mit:
- einer Produktzufuhrlinie (15), die die Produkte (C) weiterfördert; und
- einer Positionierungsvorrichtung, umfassend eine Zufuhrlinie (14), die oberhalb der Produktzufuhrlinie (15) angeordnet ist, wobei die Zufuhrlinie (14) zwischen zwei Getrieben eingebaut ist, von denen zumindest eines motorangetrieben ist, und umfassend eine Mehrzahl von einstellbaren Gabeln (13), die in einer vertikalen Richtung an der Zufuhrlinie (14) angelenkt sind, wobei die einstellbaren Gabeln (13) in einem vorbestimmten Sektor der Positionierungsvorrichtung um 90 Grad gedreht werden;
**dadurch gekennzeichnet, dass** die Produktzufuhrlinie (15) zumindest einen gekrümmten zentralen Sektor ausbildet und einen Transportweg bildet, der sich geringfügig nach oben neigt und dann nach unten neigt, so dass am höchsten Punkt der Kurve jede Verpackung nacheinander durch die jeweilige Gabel (13) gegriffen werden kann, um 90 Grad gedreht wird, während diese weiter vorwärts auf der Produktzufuhrlinie (15) bewegt wird, anschließend losgelassen wird, um diese zu der Fördermaschine (12) und dann zu der Verpackungsstation zu transportieren.

2. Verpackungsförder- und Positionierungsvorrichtung (10) nach dem vorhergehenden Anspruch, **dadurch gekennzeichnet, dass** jede Verpackung, die in einer Längsrichtung ankommt, durch die jeweilige Gabel (13) rotiert wird und damit automatisch in einer Querrichtung positioniert wird, in Richtung des Endabschnittes der Produktzufuhrlinie (15), um somit weniger Raum einzunehmen und in der am meisten geeigneten Art und Weise verpackt zu werden.

3. Verpackungsförder- und Positionierungsvorrichtung (10) nach irgendeinem der vorhergehenden Ansprüche, **dadurch gekennzeichnet, dass** die einstellbaren Gabeln (13) aus einem umgedrehten U-förmigen Abschnitt (16) bestehen, dessen Basis in der Mitte davon an dem unteren Ende eines vertikalen Rotationsschaftes (17) befestigt ist.

4. Verpackungsförder- und Positionierungsvorrichtung (10) nach dem vorhergehenden Anspruch, **dadurch gekennzeichnet, dass** eine bestimmte Anzahl von Rotationsschäften (17), an denen die jeweiligen umgedrehten U-förmigen Abschnitte montiert sind, in regelmäßigen Abständen an der Zufuhrlinie (14) positioniert sind.

5. Verpackungsförder- und Positionierungsvorrichtung (10) nach dem vorhergehenden Anspruch, **dadurch gekennzeichnet, dass** das obere Ende jedes Rotationsschaftes (17) mit einer Rotationseinrichtung (20) verbunden ist, die aus einer Verbindungsstange besteht, die gemeinsam mit ihrem äußersten Ende, welches mit einer Lagerung, einer Auflage oder etwas ähnlichem ausgestattet ist, in einer Nockenbahn (21) eingesteckt ist, die an der Zufuhrlinie (14) positioniert ist, so dass der Schaft und der relative Abschnitt sich um 90 Grad in dem vorbestimmten Sektor drehen.

6. Verpackungsförder- und Positionierungsvorrichtung (10) nach irgendeinem der vorhergehenden Ansprüche, **dadurch gekennzeichnet, dass** die Produktzufuhrlinie (15), die unterhalb der Positionierungsvorrichtung angeordnet ist, aus einem Förderband besteht, welches zwischen zwei Getrieben (22) gespannt ist und durch einen Motor (23) angetrieben ist.

7. Verpackungsförder- und Positionierungsvorrichtung (10) nach Anspruch 6, **dadurch gekennzeichnet, dass** das Band (15), auf dessen Oberfläche die Produkte transportiert werden, eine gekrümmte Form aufweist, d.h. das Band geht erst nach oben und neigt sich dann wieder nach unten.

8. Verpackungsförder- und Positionierungsvorrichtung (10) nach irgendeinem der vorhergehenden Ansprüche, **dadurch gekennzeichnet, dass** die Krümmung der Produktzufuhrzone durch Einsatz einer gekrümmten Oberfläche erhalten wird, so dass die höchste Erhebung der Kurve annähernd in der Mitte der Positionierungsvorrichtung liegt, dort wo die Gabeln (13) sind.

9. Verpackungsförder- und Positionierungsvorrichtung (10) nach irgendeinem der vorhergehenden Ansprüche, **dadurch gekennzeichnet, dass** die Fördermaschine (12), die stromabwärts der Positioniervorrichtung angeordnet ist, ebenso mit einem Zufuhrband ausgerüstet ist, in diesem Fall jedoch mit Aufteilern, die Abteilungen ausbilden, in denen jeweils eine Verpackung (C) in einer Querrichtung mit Bezug zu der Zufuhrlinie eingelegt wird.

10. Verpackungsförder- und Positionierungsvorrichtung (10) nach irgendeinem der vorhergehenden Ansprüche 6 bis 9, **dadurch gekennzeichnet, dass** das Förderband (15) regelmäßig beabstandete Löcher (24) aufweist, um den Durchtritt von Luft zu ermöglichen, welche von innerhalb der Kammer (25) angesaugt wird, auf der das Förderband positioniert ist.

11. Verpackungsförder- und Positionierungsvorrichtung (10) nach Anspruch 10, **dadurch gekennzeichnet, dass** die gekrümmte Oberfläche, auf der das Band (15) positioniert ist, die obere Oberfläche der Kammer (25) ausbildet, in der ein Vakuum durch geeignete Unterdruckmittel erzeugt ist.

12. Verpackungsförder- und Positionierungsvorrichtung (10) nach Anspruch 10 oder 11, **dadurch gekennzeichnet, dass** die Löcher (24) entlang des Bandes (15) in regelmäßigen Abständen positioniert sind, entsprechend dem Abstand zwischen den zugeführten Produkten, wobei dieser Abstand wiederum gleich ist zu dem Abstand zwischen den Gabeln (13).

## Revendications

1. Dispositif de transport et de positionnement de paquets (10) situé entre une station d'introduction de produits, déjà empaquetés et scellés, provenant d'une machine d'empaquetage et une station de collecte et de transfert des produits vers les boîtes qui forment l'emballage extérieur prêt à l'expédition vers le système de distribution, ledit dispositif comprenant :
- une chaîne d'introduction de produits (15) destinée à transporter les produits (C) ; et
- un dispositif de positionnement comprenant une chaîne d'introduction (14) située au-dessus de la chaîne d'introduction de produits (15), ladite chaîne d'introduction (14) étant logée entre deux renvois dont l'un au moins est entraîné par moteur, et une pluralité de fourches réglables (13) montées, de façon articulée dans une direction verticale, sur ladite chaîne d'introduction (14), lesdites fourches réglables étant tournées de 90° dans un secteur prédéterminé du dispositif de positionnement ;
**caractérisé en ce que** la chaîne d'introduction de produits (15) possède au moins un secteur central incurvé formant un itinéraire qui est légèrement incliné vers le haut puis vers le bras de manière à ce que, en haut de la courbe, chaque paquet peut être saisi successivement par la fourche respective (13), tournée de 90°, tout en continuant à se déplacer vers l'avant sur la chaîne d'introduction de produits (15) puis peut être libéré pour être transféré vers la machine transporteuse (12) puis la station d'emballage.

2. Dispositif de transport et de positionnement de paquets (10) selon la revendication précédente, **caractérisé en ce que** chaque paquet, entrant dans une direction longitudinale, est tourné par la fourche respective (13) et ainsi positionné automatiquement dans une direction transversale vers la partie finale de la chaîne d'introduction de produits (15), de manière à prendre le moins de place possible et être emballé de la manière la plus appropriée.

3. Dispositif de transport et de positionnement de paquets (10) selon l'une quelconque des revendications précédentes, **caractérisé en ce que** les fourches réglables (13) consistent en une section (16) en forme de U inversé dont la base est fixée en son centre à l'extrémité inférieure d'un arbre vertical rotatif (17).

4. Dispositif de transport et de positionnement de paquets (10) selon la revendication précédente, **caractérisé en ce qu'**un certain nombre d'arbres rotatifs (17), sur lesquels les sections respectives en forme de U inversé sont montées, sont positionnés à intervalles réguliers sur la chaîne d'introduction (14).

5. Dispositif de transport et de positionnement de paquets (10) selon la revendication précédente, **caractérisé en ce que** l'extrémité supérieure de chaque arbre rotatif (17) est raccordée à un dispositif de rotation (20) qui consiste en une tige de raccordement insérée conjointement avec son extrémité, dotée d'un coussinet, d'un patin ou similaire, dans une piste de came (21), positionnée sur la chaîne d'introduction (14), de manière à ce que l'arbre et la section relative tournent de 90° dans le secteur prédéterminé.

6. Dispositif de transport et de positionnement de paquets (10) selon l'une quelconque des revendications précédentes, **caractérisé en ce que** la chaîne d'introduction de produits (15), placée au-dessous du dispositif de positionnement, consiste en une bande transporteuse s'étendant entre deux renvois (22) et entraînée par un moteur (23).

7. Dispositif de transport et de positionnement de paquets (10) selon la revendication 6, **caractérisé en ce que** la bande (15), sur la surface supérieure de laquelle les produits sont transportés, présente une forme incurvée, c'est-à-dire qu'elle est tout d'abord inclinée vers le haut puis vers le bas.

8. Dispositif de transport et de positionnement de paquets (10) selon l'une quelconque des revendications précédentes, **caractérisé en ce que** la courbure de la zone d'introduction de produits est obtenue en utilisant une surface incurvée et de telle manière que le haut de la courbe se trouve à peu près au centre du dispositif de positionnement comprenant les fourches (13).

9. Dispositif de transport et de positionnement de paquets (10) selon l'une quelconque des revendications précédentes, **caractérisé en ce que** la machine transporteuse (12), située en aval du dispositif de positionnement, est également dotée d'une bande d'introduction, équipée dans ce cas de séparateurs qui forment des compartiments dans chacun desquels un paquet (C) est inséré dans une direction transversale par rapport à la chaîne d'introduction.

10. Dispositif de transport et de positionnement de paquets (10) selon l'une quelconque des revendications précédentes 6 à 9, **caractérisé en ce que** la bande transporteuse (15) présente des trous (24) espacés de façon régulière pour permettre le passage d'air aspiré depuis l'intérieur de la chambre (25) sur laquelle est positionnée la bande transporteuse.

11. Dispositif de transport et de positionnement de paquets (10) selon la revendication 10, **caractérisé en ce que** la surface incurvée sur laquelle est positionnée la bande (15) forme la surface supérieure de la chambre (25) dans laquelle un vide est généré par des moyens d'aspiration appropriés.

12. Dispositif de transport et de positionnement de paquets (10) selon la revendication 10 ou 11, **caractérisé en ce que** les trous (24) sont positionnés le long de la bande (15) à des intervalles réguliers correspondant à la distance entre les produits introduits, cette distance étant quant à elle égale à la distance entre les fourches (13).
